# EUROPEAN PATENT APPLICATION

(11) **EP 1 033 901 A2**
(43) Date of publication of application: **06.09.2000**
(21) Application number: 99204418.0
(22) Date of filing: 20.12.1999
(51) Int. Cl.: H04Q 11/04

(54) **Method and apparatus for transmitting signaling information between communication nodes coupled to a packet based network**

(30) Priority: 18.12.1998 US 215202
(71) Applicant: Nortel Networks Corporation, Montreal, Quebec H2Y 3Y4 (CA)
(72) Inventor: Lee, Jackie, Fremont, CA 94539 (US); Choy, Yau-Fun, San Jose, CA 95129 (US); Bernstein, Greg, Fremont, CA 94536 (US)
(74) Representative: Humphrey-Evans, Edward John

(57) **Abstract**

A method and system for transmitting circuit based signaling information between communication nodes connected to a packet network includes establishing a virtual signaling channel to carry signaling information in packets transmitted over the packet network, establishing a virtual communication channel to carry communication information in packets transmitted over the packet network, assigning the virtual signaling channel to the virtual communication channel and sending signals to the communication nodes over the virtual signaling channel to control operating characteristics of the virtual communication channel. A packet network interface implementing this method is connected to a packet network and a communication node that accepts packet based signaling and packet based communication information. The packet network interface includes a packet communication interface, a circuit switch communication interface, a memory having a virtual circuit switch process and an operating system process, and a processor that executes the virtual circuit switch process to manage data and voice transmitted over a virtual communication channel and manage signaling information transmitted over a virtual signaling channel and executes the operating system process to manager resources within the packet network interface.

## Description

### BACKGROUND OF THE INVENTION

### Field of the Invention

This invention generally relates to communications systems and more particularly, to a method and apparatus for transmitting signaling information between communication nodes coupled to a packet based network.

### Description of the Related Art

Presently, most voice communications and data communications are transmitted over two different types of networks: circuit switched networks and packet networks. Circuit switched networks dedicate bandwidth on a physical or logical link to a data or voice transmission. The circuit switched communications tend to provide more consistent transmission characteristics because the available bandwidth is constant. A packet network, in contrast, may not provide a constant amount of bandwidth to a data or voice transmission. On packet networks, each data or voice transmission is divided into numerous packets and sent over the same logical or physical link. Available bandwidth on a packet network, therefore, varies depending on the number of packets being transmitted by the collective data or voice transmissions.

In the past, voice transmissions have been sent over circuit switched networks. Circuit switched networks provide the high bandwidth and rapid response time required for voice communications. On the circuit switched networks, people thousands of miles apart carry on conversations with little or no delay. To provide sufficient bandwidth for voice communications, circuit switched networks partition a high-speed physical link such as T-1 or E-1 into multiple time multiplexed channels. For example, an integrated services digital network (ISDN) primary rate interchange (PRI) is used to divide a T-1 link transmitting 1.54 Mbps into 23 bearer channels (B channels) transmitting 64 Kbps and one signaling channel (D channel) transmitting 64 Kbps. The B channels are designed to carry voice and data information while the D channel is a separate channel used to transmit signaling information to control the calls being made over the B channels. Signaling information transmitted in this manner is considered "out-of-band" because the D channel is logically separated from the B channels carrying voice and data information. ISDN also defines a call control protocol that defines a set of standard messages communication nodes within an ISDN based network can send to each other over the D channel to arrange for setting up calls, breaking down calls, and providing other features particular to the communication node.

A private branch exchange (PBX) is a private telephone switch used to manage phone calls made between people within an enterprise. The PBX can also manage phone calls made to other phones connected to other PBXs. Many PBXs transmit information to each other using the ISDN protocol. Typically, PBXs use the ISDN call control protocol over the ISDN D channel to set up, tear down, or process calls made over ISDN B channels. Specially designed hardware and software use the ISDN call control protocol to provide call processing features such as call forwarding, conference call, caller ID, and other features. Over the many years, ISDN call control and signaling capabilities have become an integral part of PBX systems.

In contrast to circuit switched networks such as ISDN, packet networks have not typically been used by PBX systems due to the potential delay in transmitting information. This delay in transmission can make two-way voice communication difficult. In part, the delay is due to the additional processing of data in the packet network. Data in a packet network is divided up into many discrete packets which may have many different packet sizes. Dividing up data into packets, transmitting and reassembling these packets later in the network can delay transmission of data. Further, because the communication links in a packet network do not dedicate bandwidth to a particular transmission, packets of information may also be subject to delays caused by a sudden surge in data transmitted over the packet network. Although such delays are often tolerated when transmitting data, these delays are not tolerated in voice transmissions or other streaming media. This remains true even though packet networks typically transmit data more efficiently and at lower overall costs.

Despite the advantage of transmitting voice over circuit switched networks, there is an ongoing trend for businesses to transmit both voice and data over a single packet network. By consolidating voice and data transmissions onto a single packet network installation costs and usage fees associated with multiple separate networks are eliminated. This makes using data services, such as Internet access, and voice-based services, such as video conferencing, more cost effective. Also, combining data and voice transmissions over a single packet network facilitates the creation of many new features and services. For example, people communicating over networks combining data and voice can send voice commands over a network to operate a computer. They may also engage in telephone conference calls while collaboratively developing diagrams and figures on electronic whiteboards displayed on a computer screen.

Yet combining voice and data communication over a packet networks remains a formidable task. The packet network must be able to deliver information quickly enough so that people making voice conversations do not experience noticeable delay or distortion in their conversations. The packet network must also be backward compatible with communication equipment such as PBXs originally designed to work with circuit switched equipment. Many companies with large capital investments in PBX systems and other communication equipment cannot afford to discard their investments due to the current incompatibilities of packet networks. Accordingly, it would be desirable to have communication nodes such as PBXs transmit existing call control and signaling protocols designed for circuit switched networks over packet-based networks.

### SUMMARY OF THE INVENTION

In accordance with the present invention, as embodied and broadly described herein, a method and system for transmitting circuit based signaling information between communication nodes connected to a packet network includes establishing a virtual signaling channel to carry signaling information in packets transmitted over the packet network, establishing a virtual communication channel to carry communication information in packets transmitted over the packet network, assigning the virtual signaling channel to the virtual communication channel and sending signals to the communication nodes over the virtual signaling channel to control operating characteristics of the virtual communication channel.

In another aspect of the present invention, a packet network interface connected to a packet network and a communication node that accepts packet based signaling and packet based communication information includes a packet communication interface, a circuit switch communication interface, a memory having a virtual circuit switch process and an operating system process, and a processor that executes the virtual circuit switch process to manage data and voice transmitted over a virtual communication channel and manage signaling information transmitted over a virtual signaling channel and executes the operating system process to manage resources within the packet network interface.

### BRIEF DESCRIPTION OF THE DRAWINGS

The accompanying drawings, which are incorporated in and constitute a part of this specification, illustrate an embodiment of the invention and, together with the description, serve to explain the advantages and principles of the invention.

IN THE DRAWINGS:
FIG. 1 is a block diagram of numerous communication nodes connected to a packet network;
FIG. 2 is a block diagram of a packet network interface designed in accordance with one implementation of the present invention capable of connecting a communication node to a packet network;
FIG. 3 is a block diagram of a virtual circuit switch protocol process designed in accordance with one implementation of the present invention;
FIG. 4 is a block diagram illustrating a virtual signaling channel and a virtual communication channel in a packet network established in accordance with one implementation of the present invention; and
FIG. 5 is a flow chart indicating the steps associated with establishing a virtual signaling channel and virtual communication channels between communication nodes connected to a packet network in accordance with one implementation of the present invention.

### DETAILED DESCRIPTION OF THE INVENTION

### INTRODUCTION

Reference will now be made in detail to an implementation of the present invention as illustrated in the accompanying drawings. Wherever possible, the same reference numbers will be used throughout the drawings and the following description to refer to the same or like parts.

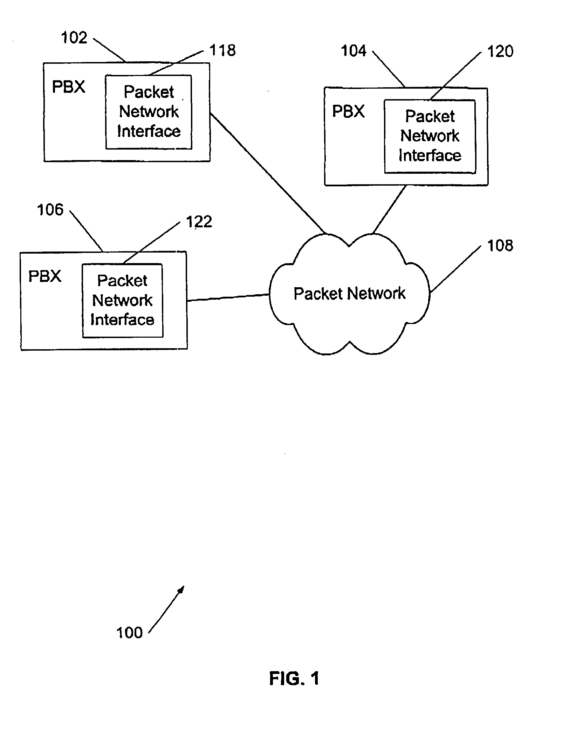

FIG. 1 is a system 100 having several communication nodes connected to a packet network. System 100 includes a PBX 102, a PBX 104, a PBX 106, connected to a packet network 108 through a packet network interface 118, a packet network interface 120, and a packet network interface 122 respectively. Using a packet network interface designed in accordance with the present invention, these PBX communication nodes can use ISDN communication control protocols while connected to packet network 108.

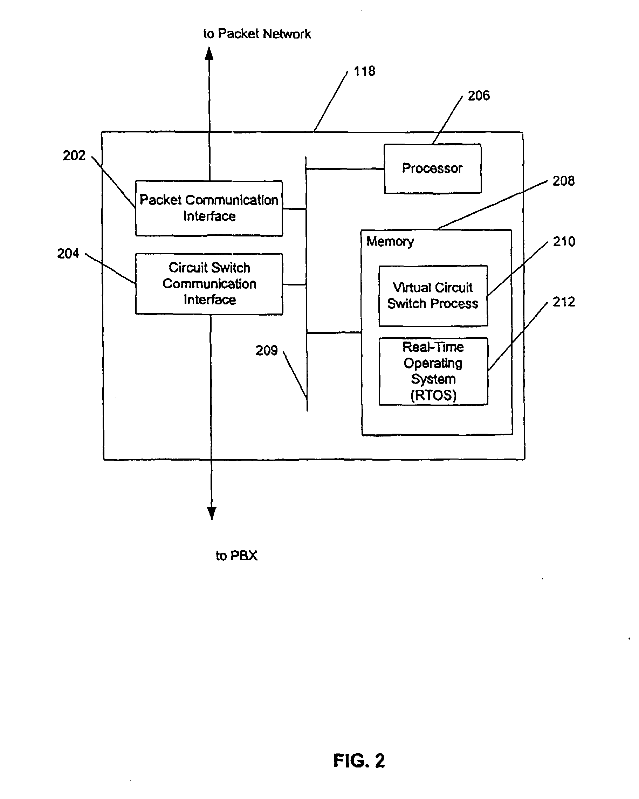

FIG. 2 is a block diagram illustrating subsystems in packet network interface 118 used to interface a packet network with a communication node. Packet network interface 118 includes a packet communication interface 202, a circuit switch communication interface 204, a processor 206, and a memory 208 coupled to a bus 209. Packet network interface 118 establishes a virtual signaling channel and virtual communication channels to transmit information over the packet network. These virtual channels provide a bridge for transmitting data and signaling information between communication nodes such as PBX 102 and PBX 104 connected to packet network. The virtual signaling channel are used to transmit signaling information corresponding to the D channel in an ISDN network. Similarly, virtual communication channels are used to transport data such as voice and data typically transmitted over the B channel in an ISDN network.

To establish these virtual signaling and communication channels, processor 206 executes processes in memory 208 including a virtual circuit switch process 210 and a real-time operating system (RTOS) 212. Packets received over communication interface 202 from packet network 108 are processed by virtual circuit switch process 210 and then sent to PBX 102 through circuit switch communication interface. If the packets can not be processed immediately, they can be stored in storage buffers for later processing.

Virtual circuit switch process 210 establishes a virtual signaling channel and a virtual communication channel over packet network 108 using virtual circuits. Signaling information carried over the virtual signaling channel carries controls the flow of data over the virtual communication channels. This signaling information enables communication nodes, such as PBXs, to transmit signaling information over the virtual signaling channel to set up, break down, and otherwise control calls made over the virtual communication channels.

The virtual signaling channel also allows PBXs to communicate with each other and provide many advanced call processing features such as call forwarding, caller ID, and conference call features. Typically, the virtual circuit switch process 210 establishes the virtual signaling channel using virtual circuit or virtual channel features built into a packet network such as ATM. Details on establishing the virtual signaling channel are discussed in further detail later herein.

The virtual communication channel carries data and voice information using a separate virtual circuit allocated on the packet network. Unlike the virtual circuit used in by the virtual signaling channel, this virtual circuit used by the virtual communication channel must transmit data quickly and with a minimum amount of delay between transmissions. This virtual circuit must provide additional performance because voice and data applications can generally not tolerate slow communication channels with large transmission delays. Details on establishing such a communication channel over a packet network to carry voice and data is described in U.S. Patent Application entitled, "METHOD AND APPARATUS FOR TRANSPORTING DS-X SIGNALS THROUGH A PACKET NETWORK", by Greg M. Bernstein, Premal Desair and Jeffrey T. Gullicksen, having Serial Number 09/073,658, filed on May 6, 1998, assigned to the assignee of the present invention, and incorporated by reference herein in the entirety.

Real-time operating system (RTOS) 212 is an operating system used to execute software modules in memory 208. RTOS 212 is used to improve the response time to requests for setting up calls and processing calls through packet network interface 118. In an alternative implementation, non-real time operating systems such as UNIX can be used to execute software modules in memory 208 instead of RTOS 212 when a real-time response is not required.

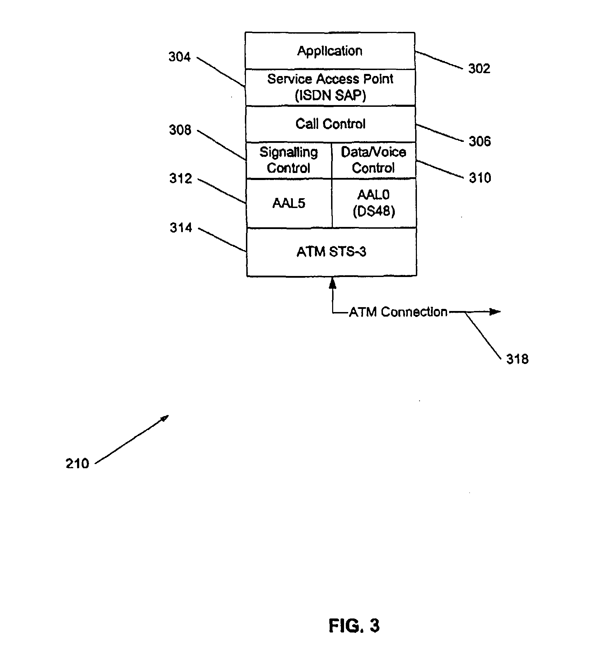

FIG. 3 is a block diagram of sub-processes associated with virtual circuit switch process 210. Virtual circuit switch process 210 facilitates communication between communication nodes such as PBX 118 and PBX 120 over packet network 108. These sub-processes include an application 302, a service access point (SAP) process 304, a call control process 306, a signaling control process 308, a data/voice control process 310, an ATM adaptation layer 5 (AAL5) 312, an ATM adaptation layer 0 (AAL0) 314, an ATM synchronous transport signal 3 (STS-3) 316, and a physical ATM connection 318.

Virtual circuit switch process 210 can be designed to work with ISDN. Accordingly, application 302 uses ISDN protocol features to transmit data over a packet network. For example, application 302 can be a PBX system that transmits ISDN-based voice and data information over a packet network. The data and voice is transmitted over an ISDN B channel and the signaling information is transmitted over an ISDN D channel. SAP 304 provides application 302 with an application programming interface (API) to transmit data from the ISDN B and D channels and operate PBX features through packet network 108.

Call control process 306 establishes calls between parties requesting phone calls or data transfer over an ATM packet network rather than a circuit switched network such as ISDN. Call control process 306 retains, however, an ISDN signaling protocol such as Q.931 to transmit signaling information between communication nodes such as the PBXs. This signaling protocol provides a messaging structure for transmitting signaling information over the packet network in accordance with the present invention. By using a standard signaling protocol such as Q.931, communication nodes from different vendors are able to communicate. For example, this enables PBXs connected to a packet network to execute call control process 306 to set-up and break down calls as well as activate voice features such as call forwarding and call waiting.

For example, communication nodes developed by different vendors that adhere to the Q.931 call control can forward phone calls through different switching devices and still preserve voice features such as caller ID information. In an ISDN network, Q.931 call control specifies that signaling information is transmitted out-of-band over the D channel rather than the B channel where voice and data is transmitted. Implementations of the present invention remain compatible with the Q.931 protocol by emulating the D and B channels over the packet network. Different techniques for establishing the D and B channels over a packet networks are discussed in further detail later herein.

Signaling control process 308 and data/voice control process 310 adapts requests made by call control 306 to a packet network such as ATM. If a call is being made between PBX systems connected to packet network 108, signaling control 308 formats and transmits messages over a virtual signaling channel carried by ATM adaptation layer 5 (AAL 5). Data/voice control 310 formats and transmits the data and voice over a virtual communication channel carried by the ATM adaptation layer 0 (AAL 0) in the ATM network. However, if a call is made between callers on the same PBX system, call control process 214 routes the voice and data information within the PBX and does not need signaling control 308 and data/voice control 310 to access the ATM packet network.

ATM adaptation layers (AAL) define how information such as voice and data are segmented in the ATM cell for transmission and reassembled at a destination. Different techniques of segmenting data for transmission and transmitting data enables the ATM network to provide transport services for different types of applications. For example, the AAL 5 format provides a predetermined method of formatting data within ATM useful in transmitting asynchronous data. It uses a small portion of the ATM cell for storing overhead information and provides better error detection than other AAL types. In general, AAL 5 works well in applications transmitting data that does not require arrival at specific time intervals. In accordance with the present invention, AAL 5 is used to carry signaling information associated with the ISDN D channel because the signaling information is not as sensitive to delays as data or voice.

In contrast, AAL 0 allows a developer to define their own technique of segmenting and transporting information in an ATM cell. The AAL 0 format is customized to fit the needs of each different application. In accordance with one embodiment of the present invention, AAL 0 is formatted to transmit data and voice information quickly and with little delay. The AAL0 is therefore used to transmit ISDN B channel voice and data information.

At the physical layer, ATM synchronous transport signal 3 (STS-3) 310 determines the physical framing and timing used to transmit ATM cells over physical ATM connections 312. Data is transmitted over physical ATM connection 312 at approximately 155 Mb/sec.

### MAPPING SIGNALING INFORMATION TO A VIRTUAL CHANNEL IN A PACKET NETWORK

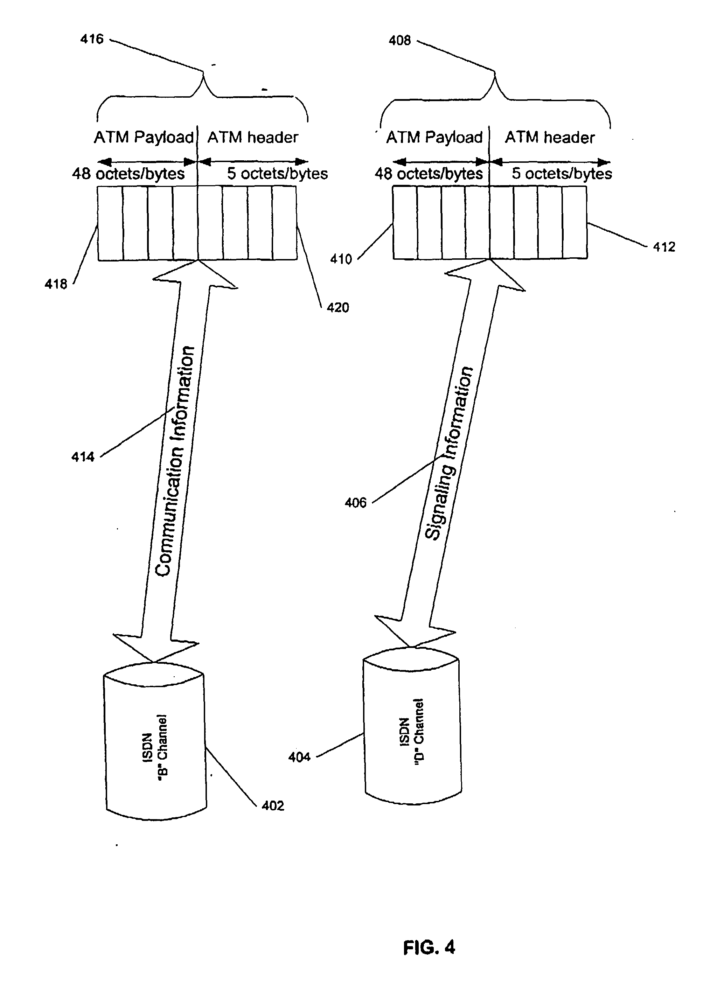

FIG. 4 is a block diagram representation illustrating a virtual signaling channel and a virtual communication in a packet network established in accordance with one implementation of the present invention. This particular implementation of the present invention illustrated in FIG. 4 utilizes the ATM protocol. Alternate packet based protocols such as TCP/IP could also be used to implement the present invention.

In an ATM network, information is carried in fixed size 53 byte cells. ATM cell 408 shows the subcomponents of an ATM cell. As illustrated, ATM cell 408 is broken down into a header 412 and a payload 410 section. Header 412 is a 5 octet/byte segment of the cell which identifies a virtual path, a virtual channel, a payload type, cell loss priority, as well as flow control information and header error control information. The virtual path in the ATM header is an 8 bit entry that identifies an actual path that cells should travel in the network. The virtual channel is a 16 bit field in the header of a cell that identifies the channel in the packet network used to transmit data. Many virtual channels can coexist over the same virtual path and transmit separate streams of information. Payload section 410 carries up to 48 octets or bytes of information can be carried in payload . Data is transmitted in payload section 410. For more information on ATM, see International Telecommunication Union (ITU-T) Standard on UNI (1.413) and AALs (1.362) incorporated by reference herein.

To transmit ISDN data over a packet network like ATM, a mapping is defined between the ISDN "B" and "D" channels and ATM cells. A PRI ISDN link has 23 B channels 402 to carry data and a D channel 404 to carry signaling information. Separate channels on the ATM network are used to carry the B channels 402 and the D channel 404. The block diagram in FIG. 4 illustrates how communication information 414 and signaling information 406 carried over the ISDN primary rate interface (PRI) link are mapped to these separate ATM cells.

Signaling information 406 is carried over D channel 404 in ATM cell 408. ATM cell 408 carries signaling information 406 in payload section 410 and corresponding routing information in header 412 of the ATM cell. Each byte of signaling information 406 is stored in slots 0 through 47 of payload section 410. If less than 48 bytes of signaling information 406 is transmitted, some slots within payload section 410 are left open and the ATM cell is underutilized. As discussed above, AAL5 protocol is used by the ATM network to transport signaling information across the ATM network.

A separate ATM cell such as ATM cell 416 is used to transmit communication information 414. ATM cell 416 includes a header 420 and a payload section 418. In this case, payload section 418 carries communication information 414 and ATM header 420 carries corresponding virtual path and virtual channel information associated with ATM cell 416. Because a separate ATM cell is used, communication information 414 can be transported over an ATM network using a customized AAL0 transport layer rather than the AAL5 layer used for signaling information 406.

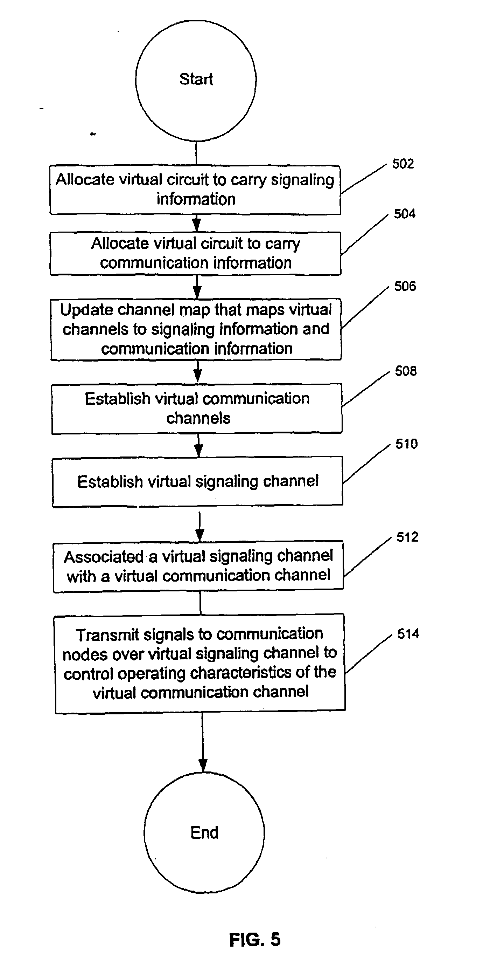

FIG. 5 is a flow chart diagram indicating the method steps associated with setting up and using a packet network to carry signaling information and voice or other data. This method corresponds to the mapping of ISDN channels and ATM cells as shown in FIG. 4. United States Patent Application Serial No. 09/073,658 entitled "METHOD AND APPARATUS FOR TRANSPORTING DS-X SIGNALS THROUGH A PACKET NETWORK," by Greg M. Bernstein et al. assigned to the assignee of the present invention and incorporated by reference herein describes how the communication information is transmitted using virtual channels in an ATM network.

Initially, virtual circuit switch process 210 allocates a virtual channel from the ATM network to carry the signaling information (step 502). For example, virtual circuit switch process 210 allocates a virtual channel from the ATM network to carry the signaling information corresponding to the D channel from an ISDN PRI link. Virtual circuit switch process 210 also allocates a virtual channel from the ATM network to carry the communication information (step 504).

Virtual circuit switch process 210 then updates a channel map that maps virtual circuit to signaling information and communication information (step 506). The channel carrying the signaling information is the virtual signaling channel and the channel carrying the communication information is the virtual communication channel. The channel map determines which channels carry signaling information and which channels carry communication information.

Next, virtual circuit switch process 210 establishes virtual communication channels corresponding to the ISDN B channels (step 508). Each virtual communication channel is used to transmit voice and video data. Virtual circuit switch process 210 also establishes virtual signaling channel corresponding to the D channel (step 510). This virtual signaling channel is used to transmit call control information in accordance with Q.931 call control protocol used over an ISDN D channel or other call control protocol utilized over a different packet network. Next, virtual circuit switch process 210 associates a virtual signaling channel with one or more virtual communication channels (step 512). This association determines the virtual signaling channels responsible for setting up, tearing down, and otherwise managing certain virtual communication channels. In operation, virtual circuit switch process 210 sends messages over the virtual signaling channel to control the virtual communication channels connected to different communication nodes (step 514).

While specific embodiments have been described herein for purposes of illustration, various modifications may be made without departing from the spirit and scope of the invention. For example, an alternative implementation of the present invention can be designed that transmits packet information over an Internet protocol (IP) network or TCP/IP network rather than an ATM network as discussed above. Similarly, another alternative implementation of the present invention could be designed that uses signaling and communication protocols corresponding to a system other than used in ISDN. Accordingly, the invention is not limited to the above described embodiments, but instead is defined by the appended claims in light of their full scope of equivalents.

The invention provides a method and system for transmitting circuit based signaling information between communication nodes connected to a packet network includes establishing a virtual signaling channel to carry signaling information in packets transmitted over the packet network, establishing a virtual communication channel to carry communication information in packets transmitted over the packet network, assigning the virtual signaling channel to the virtual communication channel and sending signals to the communication nodes over the virtual signaling channel to control operating characteristics of the virtual communication channel. A packet network interface implementing this method is connected to a packet network and a communication node that accepts packet based signaling and packet based communication information. The packet network interface includes a packet communication interface, a circuit switch communication interface, a memory having a virtual circuit switch process and an operating system process, and a processor that executes the virtual circuit switch process to manage data and voice transmitted over a virtual communication channel and manage signaling information transmitted over a virtual signaling channel and executes the operating system process to manager resources within the packet network interface.

## Claims

1. A method for transmitting circuit based signaling information between communication nodes coupled to a packet network, the method comprising the steps of:
establishing a virtual signaling channel to carry signaling information in packets transmitted over the packet network;
establishing a virtual communication channel to carry communication information in packets transmitted over the packet network;
assigning the virtual signaling channel to the virtual communication channel; and
sending signals to the communication nodes over the virtual signaling channel to control at least one operating characteristic of the virtual communication channel.

2. The method of claim 1 wherein the packet network transmits packets compatible with an asynchronous transfer mode (ATM) network.

3. A method according to claim 1 or 2 wherein the packet network transmits packets compatible with an Internet Protocol (IP) network.

4. A method according to any one of claims 1 to 3 wherein establishing a virtual signaling channel to carry signaling information further comprises:
allocating a virtual channel from the packet network to transmit signaling information between communication nodes.

5. A method according to any one of claims 1 to 4 wherein establishing a virtual communication channel further comprises:
allocating a virtual channel from the packet network to transmit communication information between communication nodes.

6. A method of according to any one of claims 1 to 5 wherein establishing a virtual signaling channel further comprises:
allocating slots within a packet transmitted over the packet network to carry signaling information between communication nodes.

7. A method according to any one of claims 1 to 6 wherein establishing a virtual communication channel further comprises:
allocating slots within a packet transmitted over the packet network to carry communication information between communication nodes.

8. A method according to any one of claims 1 to 7 wherein establishing a virtual signaling channel further comprises:
associating an ISDN signaling protocol with the virtual signaling channel.

9. A method of any one of claims 1 to 8 wherein sending signals to the communication nodes over the virtual signaling channel further comprises:
setting features on the communication nodes to enable functions associated with the virtual communication channel.

10. A method of any one of claims 1 to 9 wherein the communication nodes comprise private branch exchange (PBX) systems.

11. A method in accordance with any one of claims 1 to 9 wherein the packet network transmits packets compatible with a TCP/IP network.

12. A communication node, comprising:
a packet communication interface capable of being coupled to a packet network;
a circuit switch communication interface capable of being coupled to a circuit switch network having communication information and signaling information;
a memory capable of having a virtual circuit switch process and an operating system process;
a processor capable of executing the virtual circuit switch process and associating a virtual signaling channel on the packet network with the signaling information and a virtual communication channel on the packet network with the communication information wherein the virtual signaling channel is capable of controlling at least one operating characteristic of the virtual communication channel.

13. A packet network interface used to transmit circuit based signaling information between communication nodes connected to a packet network, comprising:
means for establishing a virtual signaling channel to carry signaling information in packets transmitted over the packet network;
means for establishing a virtual communication channel to carry communication information in packets transmitted over the packet network;
means for assigning the virtual signaling channel to the virtual communication channel; and
means for sending signals to the communication nodes over the virtual signaling channel to control at least one operating characteristic of the virtual communication channel.

14. A method for transmitting circuit based signaling information between communication nodes connected to a packet network, the method comprising the steps of:
establishing a virtual signaling channel to carry signaling information in packets transmitted over the packet network;
assigning the virtual signaling channel to a virtual communication channel used to carry communication information over the packet network; and
sending signals to the communication nodes over the virtual signaling channel to control at least one operating characteristic of the virtual communication channel.
